# EUROPEAN PATENT SPECIFICATION

(11) **EP 2 720 501 B1**
(45) Date of publication and mention of the grant of the patent: **16.08.2017**
(21) Application number: 12796542.4
(22) Date of filing: 19.01.2012
(51) Int. Cl.: H04L 29/08

(54) **DISTRIBUTED STORAGE SYSTEM AND METHOD OF TIME STAMP CONTROL THEREFORE.**
VERTEILTES SPEICHERSYSTEM UND VERFAHREN ZUR ZEITSTEMPELVERWALTUNG DAFÜR.
SYSTÈME DE MÉMORISATION DISTRIBUÉ ET PROCÉDÉ DE GESTION D'ESTAMPILLE TEMPORELLE POUR CE SYSTÈME.

(30) Priority: 07.06.2011 CN 201110151514
(43) Date of publication of application: 16.04.2014
(73) Proprietor: ZTE Corporation, Shenzhen, Guangdong 518057 (CN)
(72) Inventor: HU, Huanhuan, Shenzhen Guangdong 518057 (CN); GUO, Bin, Shenzhen Guangdong 518057 (CN); CHEN, Dianqiang, Shenzhen Guangdong 518057 (CN); HAN, Yinjun, Shenzhen Guangdong 518057 (CN)
(74) Representative: Novagraaf Technologies
(86) International application number: PCT/CN2012/070618
(87) International publication number: WO 2012/167625

(56) References cited:
- CN-A- 1 960 242
- CN-A- 101 656 977
- US-A- 5 428 645
- US-A1- 2004 260 972
- US-A1- 2006 222 016
- US-A1- 2011 010 434
- US-B2- 7 487 229
- US-B2- 7 561 559

## Description

### Technical Field

The present invention relates to the technical field of cloud computing, and particularly to a distributed storage system and an implementation method of a time stamp of a distributed storage system.

### Background

Cloud computing is a product of the development and convergence of conventional computer technologies and network technologies, such as grid computing, distributed computing, parallel computing, utility computing, network storage technologies, virtualization, load balance, etc. It is intended to integrate a plurality of computing entities with relatively low costs into a system with a powerful computing capability via a network. Distributed storage system is a field of the cloud computing domain, the function of which is to provide a distributed storage service of mass data and high speed read/write access.

In a distributed storage system, the implementation of a time stamp is a key problem which is not easy to handle. The distributed storage system consists of several server nodes and clients which are connected to each other, wherein the server node is responsible for storing data, and the client can perform operations on the server data, such as write, read, update, delete, etc.

Generally, the written data will not be stored at a single server node; instead, the duplicates of the same data are stored at a plurality of server nodes to serve as backup for each other. When the network has failed instantly and accidentally or the hardware and software has failed, or the user performs different operations, such as update, delete, etc., on the same data frequently and crosswise, the data duplicates at different server nodes in the distributed storage system may have different values. When the user acquires the data again, the obtained data may not be the value updated thereby at last, which departs from the user demand.

In order to ensure that in the distributed storage system, the data obtained by the user are the data updated thereby at last, that is, ensuring the consistency of the data in the distributed storage system, during actual storage, each piece of data has to be added with some attributed information, for example, time stamp. As such, when the user acquires data, the data with the biggest time stamp can be returned to the user according to the value of the time stamp. The time stamp in the distributed storage system refers to a piece of data which reflects the survival time of the distributed storage system and is maintained by each server node in the distributed storage system. At any moment, the time stamp of each server node in the distributed storage system must be the same, and increases progressively with the increasing of the actual time.

In the existing distributed storage system, the implementation of the time stamp has the following methods.

Method I: one server node in the distributed storage system is selected as a time server, this time server periodically broadcasts the time stamp maintained thereby to other server nodes in the distributed storage system, and after receiving a data package carrying the time stamp, other server nodes update the local time stamps thereof. This method is a centralized solution, the reliability thereof depends on the reliability of the time server in the distributed storage system, and if the time server is down, the time stamps of the entire system will be affected. Moreover, for the time stamps updated in ordinary server nodes, the transmission time of the data packages in the network is not calculated, that is to say, there is a slight time difference between the time stamps of the ordinary server nodes and the time stamp of the time server. In addition, in this method, once the time server has failed, the entire system will not be able to update the time stamp correctly.

Method II: each server node in the distributed storage system acquires authorized time from a network time protocol (NTP) time server in the Internet as the local time stamp of the present node. This method depends on the service from the external, which is not very usually used.

US 2004/260972 A1 and US 2011010434 A1 provide respective technical solutions: however, the above mentioned problem still remains unsolved.

### Summary

The present invention provides a distributed storage system and an implementation method of a time stamp of a distributed storage system, so as to solve the problem that the existing centralization-based implementation method is not high in reliability.

The present invention provides an implementation method for a time stamp of a distributed storage system, including the following steps:
each server node of the distributed storage system maintaining a local time stamp;
each server node periodically sending a data package carrying a current time stamp maintained locally to the other server nodes in the distributed storage system; and
each server node updating the local time stamp according to the received data package.

Preferably, each server node of the distributed storage system maintaining the local time stamp includes:
setting an initial value of the time stamp maintained locally by each server node as 0 and the time stamp automatically increasing by 1 per second from the first running of the distributed storage system.

Preferably, each server node updating the local time stamp according to the received data package includes:
parsing the received data package to obtain a time stamp and a check bit;
judging whether the check bit is correct, and if the check bit is incorrect, not updating the local time stamp and discarding the time stamp obtained by parsing;
when the check bit is correct, storing the time stamp obtained by parsing;
judging whether the difference between the value of the time stamp obtained by parsing and the value of a time stamp stored previously is within the range of a preset check threshold, and when the difference is not within the range of the check threshold, not updating the local time stamp; and
when the difference is within the range of the check threshold, judging whether the value of the time stamp obtained by parsing is greater than the value of the local current time stamp, and if the value of the time stamp obtained by parsing is greater than the value of the local current time stamp, updating the local time stamp using the time stamp obtained by parsing; and when the value of the time stamp obtained by parsing is not greater than the value of the local current time stamp, not updating the local time stamp.

Preferably, the method further includes: each server node in the distributed storage system enabling persistence of the local time stamp in a file stored locally every other second.

Preferably, when the distributed storage system recovers to operate normally after abnormal termination, each server node of the distributed storage system maintaining the local time stamp includes: continuing timing for the local time stamp of each server node from the time stamp which persists before the abnormal termination.

Preferably, in the method, each server node only stores two time stamps at the same moment, and when a new time stamp is stored, the time stamp stored firstly overflows automatically.

Preferably, the check threshold is 1 to 1.5 times a period for sending the data package carrying the time stamp by the server node.

The present invention also provides a distributed storage system, including a plurality of server nodes connected to each other, wherein each server node includes a time stamp maintenance module and a time stamp update module; wherein
the time stamp maintenance module is configured to provide a time stamp to local and periodically send a data package carrying a local current time stamp to the other server nodes in the distributed storage system; and
the time stamp update module is configured to update the time stamp of the time stamp maintenance module according to the received data package.

Preferably, the time stamp maintenance module is further configured to provide an interface for setting a period for sending the data package carrying the local current time stamp, increase the time stamp by 1 per second, and enable persistence of the time stamp in a file stored locally every other second; and when the distributed storage system recovers to operate normally after abnormal termination, continue timing from the time stamp which persists before the abnormal termination; and
the time stamp update module is further configured to provide an interface for setting a check threshold, parse the received data package, judge whether an obtained check bit is correct, store a time stamp obtained by parsing when the check bit is correct, judge whether the difference between the value of the time stamp obtained by parsing and the value of the time stamp stored previously is within the range of the check threshold, judge whether the value of the time stamp obtained by parsing is greater than the value of the current time stamp of the time stamp maintenance module when the difference is within the range of the check threshold, and update the current time stamp of the time stamp maintenance module with the time stamp obtained by parsing when the value of the time stamp obtained by parsing is greater than the value of the current time stamp of the time stamp maintenance module.

Preferably, each server node further includes: a time stamp storage module which is configured to store a time stamp and overflow a time stamp stored firstly when a new time stamp is stored.

In the present invention, by means of maintaining a time stamp on each server node and periodically updating the local time stamp according to the time stamps of the other nodes, it is ensured that the time stamp on each server node in the distributed storage system is the same at any moment. In the present invention, the time stamp of each server node has very high reliability, which is a non-centralized solution method and will not cause the time stamps of the entire system to be abnormal due to the abnormal of a certain server node in the distributed storage system.

### Brief Description of the Drawings

Fig. 1 is a flowchart of an implementation method for a time stamp of a distributed storage system; and
Fig. 2 is schematic block diagram of a distributed storage system in an embodiment of the present invention.

### Detailed Description of the Embodiments

In order to make the technical problems to be solved by the present invention, the technical solution and beneficial effects thereof more clear, the present invention will be described further in detail in conjunction with the drawings and embodiments. It should be understood that the particular embodiments described here are merely for explaining the present invention, not for limiting the present invention.

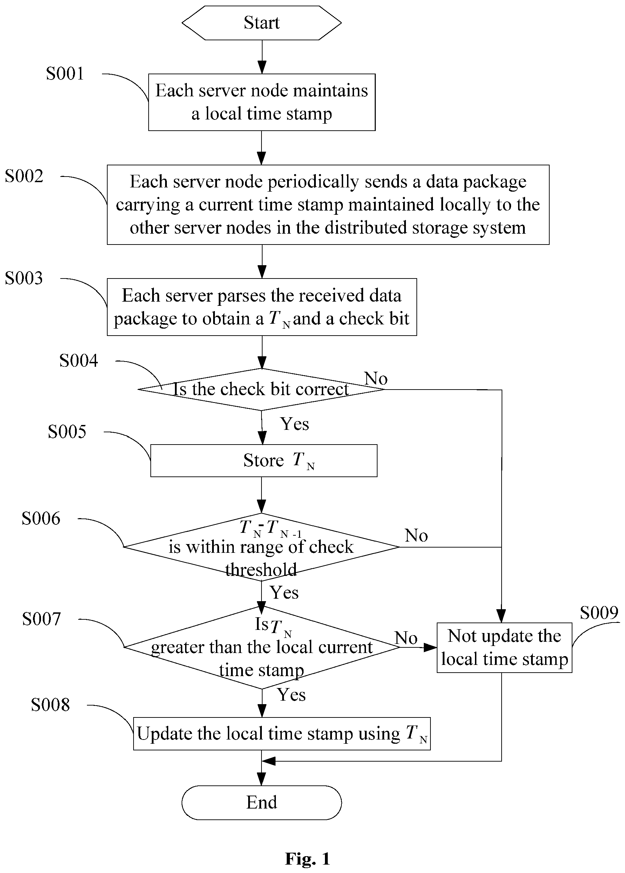

Fig. 1 is a flowchart of an implementation method for a time stamp of a distributed storage system. As shown in Fig. 1, the method includes the following steps.

In step S001, each server node of a distributed storage system maintains a local time stamp.

Each server node enables persistence of the local time stamp in a file stored locally every other second.

The initial value of the time stamp maintained locally by each server is 0 and the local time stamp of each server automatically increases by 1 per second from the first running of the distributed storage system.

When the distributed storage system recovers to operate normally after abnormal termination, timing is continued for the local time stamp of each server node from the time stamp which persists before the abnormal termination, for example, if the value of the time stamp which persists is 120 before the abnormal termination, after the distributed storage system operates normally, timing will be continued from 120.

In Step S002: each server node periodically sends a data package carrying the current time stamp maintained locally to the other server nodes in the distributed storage system.

Each server node sends a data package carrying the current time stamp maintained locally to the other server nodes through a long link established during system initialization.

For example, it can be preset that each server node sends a data package carrying the local time stamp to the other server nodes in the distributed storage system every 60 seconds.

In Step S003, each server parses the received data package to obtain a time stamp *T*_{N} and a check bit.

In Step S004, it is judged whether the check bit obtained by parsing is correct, if yes, Step S005 is performed, otherwise, Step S009 is performed.

In an embodiment of the present invention, when it is judged that the check bit obtained by parsing is wrong, the time stamp *T*_{N} obtained by parsing will be discarded.

In Step S005, the above-mentioned time stamp *T*_{N} is stored.

In an embodiment of the present invention, each server node only stores two time stamps at the same moment, and when a new time stamp is stored, the time stamp stored firstly overflows automatically. For example, assuming that the current period is the Nth period and the check bits of two previous periods thereof are both correct, the stored time stamp is the time stamp *T*_{N-2} of the (N-2)th period and the time stamp *T*_{N-1} of the (N-1)th period before storing the time stamp *T*_{N} carried in the data package received in the Nth period, and when storing the time stamp *T*_{N} of the Nth period, the time stamp *T*_{N-2} of the (N-2)th period overflows automatically.

In Step S006, it is judged whether the difference between the value of the above-mentioned time stamp *T*_{N} and the value of the time stamp *T*_{N-1} stored previously is within the range of a preset check threshold, if yes, Step S007 is performed, otherwise, Step S009 is performed.

The above-mentioned check threshold may be set to be 1 time to 1.5 times the period for sending the data package carrying the time stamp by the present server node. For example, if the period for sending the data package carrying the time stamp by the present server node is 60 seconds, the check threshold is 60 to 90. If *T*_{N} - *T*_{N-1} is not within the range of the check threshold, it indicates that an exception occurs to this data package during transmission.

In Step S007, it is judged whether the value of the time stamp *T*_{N} obtained by parsing is greater than the value of the locally maintained current time stamp, if yes, Step S008 is performed; otherwise, Step S009 is performed.

Steps S005, S006 and S007 effectively ensure the consistency of the time stamp on each server node and avoid the situation where an exception occurs to the time stamps of the other server nodes due to the fact that an exception occurs to the data package carrying a time stamp during transmission.

In Step S008, the local time stamp is updated with the above-mentioned time stamp *T*_{N}*,* and this period ends.

In Step S009, the local time stamp is not updated, and this period ends.

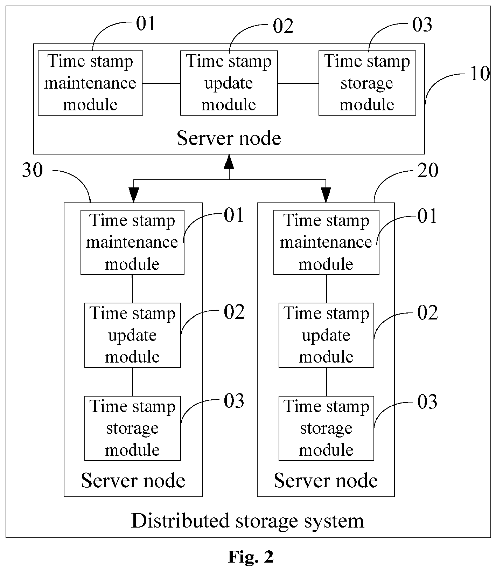

As shown in Fig. 2, it is a schematic block diagram of a distributed storage system in an embodiment of the present invention, and in this embodiment, it is assumed that the distributed storage system includes 3 server nodes, which are respectively 10, 20 and 30, each server includes a time stamp maintenance module 01, a time stamp update module 02 and a time stamp storage module 03.

The time stamp maintenance module 01 is configured to provide a time stamp to the local, increase the above mentioned time stamp by 1 per second, and enable persistence of the time stamp to a file stored locally every other second; and also to provide an interface for setting a period for sending the data package carrying the local current time stamp, periodically send a data package carrying a local current time stamp to the other server nodes in the distributed storage system; and when the distributed storage system recovers to operate normally after abnormal termination, continue timing from the time stamp which persists before the abnormal termination.

The time stamp update module 02 is configured to provide an interface for setting a check threshold, parse the received data package, judge whether a check bit obtained by parsing is correct, store a time stamp *T*_{N} obtained by parsing in the time stamp storage module 03 when the check bit is correct, judge whether the difference between the value of the time stamp *T*_{N} and the value of the time stamp *T*_{N-1} stored previously is within the range of the check threshold, judge whether the value of the time stamp *T*_{N} is greater than the value of the current time stamp of the time stamp maintenance module 01 when the difference is within the range of the check threshold, and update the time stamp of the time stamp maintenance module 01 with the time stamp *T*_{N} when the value of the time stamp *T*_{N} is greater than the value of the current time stamp of the time stamp maintenance module 01.

The time stamp storage module 03 is configured to store the time stamp *T*_{N} obtained by parsing and automatically overflow a firstly stored time stamp when a new time stamp is stored.

## Claims

1. An implementation method for a time stamp of a distributed storage system, **characterized in that** the method comprises:
each server node of the distributed storage system maintaining a local time stamp;
each server node periodically sending a data package carrying a current time stamp maintained locally to the other server nodes in the distributed storage system; and
each server node updating the local time stamp according to the received data package;
wherein each server node updating the local time stamp according to the received data package comprises:
parsing the received data package to obtain a time stamp and a check bit;
judging whether the check bit is correct, and if the check bit is incorrect, not updating the local time stamp and discarding the time stamp obtained by parsing;
when the check bit is correct, storing the time stamp obtained by parsing;
judging whether the difference between the value of the time stamp obtained by parsing and the value of a time stamp stored previously is within the range of a preset check threshold, and when the difference is not within the range of the check threshold, not updating the local time stamp; and
when the difference is within the range of the check threshold, judging whether the value of the time stamp obtained by parsing is greater than the value of the local current time stamp, and if the value of the time stamp obtained by parsing is greater than the value of the local current time stamp, updating the local time stamp using the time stamp obtained by parsing; and when the value of the time stamp obtained by parsing is not greater than the value of the local current time stamp, not updating the local time stamp.

2. The method according to claim 1, **characterized in that** each server node of the distributed storage system maintaining the local time stamp comprises:
setting an initial value of the time stamp maintained locally by each server node as 0 and the time stamp automatically increasing by 1 per second from the first running of the distributed storage system.

3. The method according to claim 1, **characterized by** further comprising:
each server node in the distributed storage system enabling persistence of the local time stamp in a file stored locally every other second.

4. The method according to claim 1 or 3, **characterized in that** when the distributed storage system recovers to operate normally after abnormal termination, each server node of the distributed storage system maintaining the local time stamp comprises:
continuing timing for the local time stamp of each server node from the time stamp which persists before the abnormal termination.

5. The method according to claim 1, **characterized in that** storing the time stamp comprises:
each server node only storing two time stamps at the same moment, and when a new time stamp is stored, the time stamp stored firstly overflowing automatically.

6. The method according to claim 1, **characterized in that** the check threshold is 1 to 1.5 times a period for sending the data package carrying the time stamp by the server node.

7. A distributed storage system, **characterized by** comprising a plurality of server nodes connected to each other, wherein each server node comprises a time stamp maintenance module and a time stamp update module; wherein
the time stamp maintenance module is configured to provide a time stamp to local and periodically send a data package carrying a local current time stamp to the other server nodes in the distributed storage system; and
the time stamp update module is configured to update the time stamp of the time stamp maintenance module according to the received data package;
wherein the time stamp update module is further configured to provide an interface for setting a check threshold, parse the received data package, judge whether an obtained check bit is correct, store a time stamp obtained by parsing when the check bit is correct, judge whether the difference between the value of the time stamp obtained by parsing and the value of the time stamp stored previously is within the range of the check threshold, judge whether the value of the time stamp obtained by parsing is greater than the value of the current time stamp of the time stamp maintenance module when the difference is within the range of the check threshold, and update the current time stamp of the time stamp maintenance module with the time stamp obtained by parsing when the value of the time stamp obtained by parsing is greater than the value of the current time stamp of the time stamp maintenance module.

8. The distributed storage system according to claim 7, **characterized in that** the time stamp maintenance module is further configured to provide an interface for setting a period for sending the data package carrying the local current time stamp, increase the time stamp by 1 per second, and enable persistence of the time stamp in a file stored locally every other second; and when the distributed storage system recovers to operate normally after abnormal termination, continue timing from the time stamp which persists before the abnormal termination.

9. The distributed storage system according to claim 7 or 8, **characterized in that** each server node further comprises: a time stamp storage module which is configured to store a time stamp and overflow a time stamp stored firstly when a new time stamp is stored.

## Patentansprüche

1. Implementierungsverfahren für einen Zeitstempel eines verteilten Speichersystems, **dadurch gekennzeichnet, dass** das Verfahren umfasst:
Halten eines lokalen Zeitstempels durch jeden Serverknoten des verteilten Speichersystems;
regelmäßiges Senden eines Datenpakets, das einen lokal gehaltenen aktuellen Zeitstempel überträgt, durch jeden Serverknoten an die anderen Serverknoten in dem verteilten Speichersystem; und
Aktualisieren des lokalen Zeitstempels durch jeden Serverknoten entsprechend dem empfangenen Datenpaket;
wobei das Aktualisieren des lokalen Zeitstempels durch jeden Serverknoten entsprechend dem empfangenen Datenpaket umfasst:
Parsen des empfangenen Datenpakets, um einen Zeitstempel und ein Prüfbit zu erhalten;
Beurteilen, ob das Prüfbit korrekt ist, und Nicht-Aktualisieren des lokalen Zeitstempels und Verwerfen des durch Parsen erhaltenen Zeitstempels, wenn das Prüfbit nicht korrekt ist;
Speichern des durch Parsen erhaltenen Zeitstempels, wenn das Prüfbit korrekt ist;
Beurteilen, ob die Differenz zwischen dem Wert des durch Parsen erhaltenen Zeitstempels und dem Wert eines zuvor gespeicherten Zeitstempels innerhalb des Bereichs eines voreingestellten Prüfschwellenwertes liegt, und Nicht-Aktualisieren des lokalen Zeitstempels, wenn die Differenz nicht innerhalb des Bereichs des Prüfschwellenwertes liegt; und
Beurteilen, wenn die Differenz innerhalb des Bereichs des Prüfschwellenwertes liegt, ob der Wert des durch Parsen erhaltenen Zeitstempels größer ist als der Wert des lokalen aktuellen Zeitstempels, und Aktualisieren des lokalen Zeitstempels unter Verwendung des durch Parsen erhaltenen Zeitstempels, wenn der Wert des durch Parsen erhaltenen Zeitstempels größer ist als der Wert des lokalen aktuellen Zeitstempels; und Nicht-Aktualisieren des lokalen Zeitstempels, wenn der Wert des durch Parsen erhaltenen Zeitstempels nicht größer ist als der Wert des lokalen aktuellen Zeitstempels.

2. Verfahren nach Anspruch 1, **dadurch gekennzeichnet, dass** das Halten des lokalen Zeitstempels durch jeden Serverknoten des verteilten Speichersystems umfasst:
Einstellen eines Anfangswertes des durch jeden Serverknoten lokal gehaltenen Zeitstempels auf 0 und automatisches Erhöhen des Zeitstempels um 1 pro Sekunde ab dem ersten Laufen des verteilten Speichersystems.

3. Verfahren nach Anspruch 1, **dadurch gekennzeichnet, dass** es weiter umfasst:
Ermöglichen des Fortbestehens des lokalen Zeitstempels in einer alle zwei Sekunden lokal gespeicherten Datei durch jeden Serverknoten in dem verteilten Speichersystem.

4. Verfahren nach Anspruch 1 oder 3, **dadurch gekennzeichnet, dass** wenn das verteilte Speichersystem nach anormalem Beenden den normalen Betrieb wieder herstellt, das Halten des lokalen Zeitstempels durch jeden Serverknoten des verteilten Speichersystems umfasst:
Fortsetzen der Zeitzählung für den lokalen Zeitstempel jedes Serverknotens ab dem Zeitstempel, der vor dem anormalen Beenden fortbesteht.

5. Verfahren nach Anspruch 1, **dadurch gekennzeichnet, dass** das Speichern des Zeitstempels umfasst:
Speichern von nur zwei Zeitstempeln gleichzeitig durch jeden Serverknoten, und automatisches Überlaufen des zuerst gespeicherten Zeitstempels, wenn ein neuer Zeitstempel gespeichert wird.

6. Verfahren nach Anspruch 1, **dadurch gekennzeichnet, dass** der Prüfschwellenwert das 1- bis 1,5-Fache eines Zeitraums zum Senden des den Zeitstempel übertragenden Datenpakets durch den Serverknoten ist.

7. Verteiltes Speichersystem, **dadurch gekennzeichnet, dass** es eine Vielzahl von miteinander verbundenen Serverknoten umfasst, wobei jeder Serverknoten ein Zeitstempel-Haltemodul und ein Zeitstempel-Aktualisierungsmodul umfasst; wobei
das Zeitstempel-Haltemodul dazu konfiguriert ist, einen Zeitstempel an lokal bereitzustellen und regelmäßig ein Datenpaket, das einen lokalen aktuellen Zeitstempel überträgt, an die anderen Serverknoten in dem verteilten Speichersystem zu senden; und
das Zeitstempel-Aktualisierungsmodul dazu konfiguriert ist, den Zeitstempel des Zeitstempel-Haltemoduls entsprechend dem empfangenen Datenpaket zu aktualisieren;
wobei das Zeitstempel-Aktualisierungsmodul weiter dazu konfiguriert ist, eine Schnittstelle zum Einstellen eines Prüfschwellenwertes bereitzustellen, das empfangene Datenpaket zu parsen, zu beurteilen, ob ein erhaltenes Prüfbit korrekt ist, wenn das Prüfbit korrekt ist einen durch Parsen erhaltenen Zeitstempel zu speichern, zu beurteilen, ob die Differenz zwischen dem Wert des durch Parsen erhaltenen Zeitstempels und dem Wert des zuvor gespeicherten Zeitstempels innerhalb des Bereichs des Prüfschwellenwertes liegt, wenn die Differenz innerhalb des Bereichs des Prüfschwellenwert liegt zu beurteilen, ob der Wert des durch Parsen erhaltenen Zeitstempels größer ist als der Wert des aktuellen Zeitstempels des Zeitstempel-Haltemoduls, und den aktuellen Zeitstempel des Zeitstempel-Haltemoduls mit dem durch Parsen erhaltenen Zeitstempel zu aktualisieren, wenn der Wert des durch Parsen erhaltenen Zeitstempels größer ist als der Wert des aktuellen Zeitstempels des Zeitstempel-Haltemoduls.

8. Verteiltes Speichersystem nach Anspruch 7, **dadurch gekennzeichnet, dass**
das Zeitstempel-Haltemodul weiter dazu konfiguriert ist, eine Schnittstelle zum Einstellen eines Zeitraums zum Senden des den aktuellen lokalen Zeitstempel übertragenden Datenpakets bereitzustellen, den Zeitstempel um 1 pro Sekunde zu erhöhen, und Fortbestehen des Zeitstempels in einer alle zwei Sekunden lokal gespeicherten Datei zu ermöglichen; und die Zeitzählung ab dem Zeitstempel, der vor dem anormalen Beenden fortbesteht fortzusetzen, wenn das verteilte Speichersystem nach anormalen Beenden den normalen Betrieb wieder herstellt.

9. Verteiltes Speichersystem nach Anspruch 7 oder 8, **dadurch gekennzeichnet, dass** jeder Serverknoten weiter umfasst: ein Zeitstempel-Speichermodul, das dazu konfiguriert ist, einen Zeitstempel zu speichern und einen zuerst gespeicherten Zeitstempel zu überlaufen, wenn ein neuer Zeitstempel gespeichert wird.

## Revendications

1. Procédé de mise en oeuvre d'une estampille temporelle d'un système de stockage distribué, **caractérisé en ce que** le procédé comprend :
le maintien par chaque noeud de serveur du système de stockage distribué d'une estampille temporelle locale ;
l'envoi périodique par chaque noeud de serveur d'un ensemble de données portant une estampille temporelle actuelle maintenue localement aux autres noeuds de serveur dans le système de stockage distribué ; et
la mise à jour par chaque noeud de serveur de l'estampille temporelle locale en fonction de l'ensemble de données reçu ;
dans lequel la mise à jour par chaque noeud de serveur de l'estampille temporelle locale en fonction de l'ensemble de données reçu comprend :
analyser l'ensemble de données reçu pour obtenir une estampille temporelle et un bit de contrôle ;
juger si le bit de contrôle est correct, et si le bit de contrôle est incorrect, ne pas mettre à jour l'estampille temporelle locale et rejeter l'estampille temporelle obtenue par analyse ;
quand le bit de contrôle est correct, stocker l'estampille temporelle obtenue par analyse ;
juger si la différence entre la valeur de l'estampille temporelle obtenue par analyse et la valeur d'une estampille temporelle stockée précédemment est dans une plage d'un seuil de contrôle prédéfini, et quand la différence n'est pas dans la plage du seuil de contrôle, ne pas mettre à jour l'estampille temporelle locale ; et
quand la différence est dans la plage du seuil de contrôle, juger si la valeur de l'estampille temporelle obtenue par analyse est supérieure à la valeur de l'estampille temporelle actuelle locale, et si la valeur de l'estampille temporelle obtenue par analyse est supérieure à la valeur de l'estampille temporelle actuelle locale, mettre à jour l'estampille temporelle locale en utilisant l'estampille temporelle obtenue par analyse ; et quand la valeur de l'estampille temporelle obtenue par analyse n'est pas supérieure à la valeur de l'estampille temporelle actuelle locale, ne pas mettre à jour de l'estampille temporelle locale.

2. Procédé selon la revendication 1, **caractérisé en ce que** le maintien de l'estampille temporelle locale par chaque noeud de serveur du système de stockage distribué comprend :
le réglage d'une valeur initiale de l'estampille temporelle maintenue localement par chaque noeud de serveur comme 0 et l'augmentation automatique de l'estampille temporelle de 1 par seconde à partir du premier fonctionnement du système de stockage distribué.

3. Procédé selon la revendication 1, **caractérisé en ce qu'**il comprend en outre :
l'autorisation d'une persistance de l'estampille temporelle locale dans un fichier stocké localement toutes les deux secondes par chaque noeud de serveur dans le système de stockage distribué.

4. Procédé selon la revendication 1 ou 3, **caractérisé en ce que**, quand le système de stockage distribué recommence à fonctionner normalement après une terminaison anormale, le maintien de l'estampille temporelle locale par chaque noeud de serveur dans le système de stockage distribué comprend :
la poursuite de la synchronisation pour l'estampille temporelle locale de chaque noeud de serveur à partir de l'estampille temporelle qui persiste avant la terminaison anormale.

5. Procédé selon la revendication 1, **caractérisé en ce que** le stockage de l'estampille temporelle comprend :
le stockage par chaque noeud de serveur de deux estampilles temporelles au même moment et, quand une nouvelle estampille temporelle est stockée, le débordement automatique de l'estampille temporelle stockée en premier.

6. Procédé selon la revendication 1, **caractérisé en ce que** le seuil de contrôle est 1 à 1,5 fois une période pour envoyer l'ensemble de données portant l'estampille temporelle par le noeud de serveur.

7. Système de stockage distribué, **caractérisé en ce qu'**il comprend une pluralité de noeuds de serveur connectés l'un à l'autre, dans lequel chaque noeud de serveur comprend un module de maintenance d'estampille temporelle et un module de mise à jour d'estampille temporelle ; dans lequel
le module de maintenance d'estampille temporelle est configuré pour fournir une estampille temporelle en local et envoyer périodiquement un ensemble de données portant une estampille temporelle actuelle locale aux autres noeuds de serveur dans le système de stockage distribué ; et
le module de mise à jour d'estampille temporelle est configuré pour mettre à jour l'estampille temporelle du module de maintenance d'estampille temporelle en fonction de l'ensemble de données reçu ;
dans lequel le module de mise à jour d'estampille temporelle est configuré en outre pour fournir une interface pour le réglage d'un seuil de contrôle, effectuer l'analyse de l'ensemble de données reçu, juger si un bit de contrôle obtenu est correct, stocker une estampille temporelle obtenue par analyse quand le bit de contrôle est correct, juger si la différence entre la valeur de l'estampille temporelle obtenue par analyse et la valeur d'une estampille temporelle stockée précédemment est dans la plage du seuil de contrôle, juger si la valeur de l'estampille temporelle obtenue par analyse est supérieure à la valeur de l'estampille temporelle actuelle du module de maintenance d'estampille temporelle quand la différence est dans la plage du seuil de contrôle, et mettre à jour l'estampille temporelle actuelle du module de maintenance d'estampille temporelle avec l'estampille temporelle obtenue par analyse quand la valeur de l'estampille temporelle obtenue par analyse est supérieure à la valeur de l'estampille temporelle actuelle du module de maintenance d'estampille temporelle.

8. Système de stockage distribué selon la revendication 7, **caractérisé en ce que**
le module de maintien d'estampille temporelle est configuré en outre pour fournir une interface pour le réglage d'une période pour envoyer l'ensemble de données portant l'estampille temporelle actuelle locale, augmenter l'estampille temporelle de 1 par seconde, et permettre une persistance de l'estampille temporelle dans un fichier stocké localement toutes les deux secondes ; et quand le système de stockage distribué recommence à fonctionner normalement après une terminaison anormale, poursuivre la synchronisation à partir de l'estampille temporelle qui persiste avant la terminaison anormale.

9. Système de stockage distribué selon la revendication 7 ou 8, **caractérisé en ce que** chaque noeud de serveur comprend en outre : un module de stockage d'estampille temporelle qui est configuré pour stocker une estampille temporelle et faire déborder une estampille temporelle stockée en premier quand une nouvelle estampille temporelle est stockée.
